Europäisches Patentamt

European Patent Office

Office européen des brevets

(19)

(11) Veröffentlichungsnummer: **0 021 073**
**B1**

(12) **EUROPÄISCHE PATENTSCHRIFT**

(45) Veröffentlichungstag der Patentschrift:
09.02.83

(21) Anmeldenummer: 80102939.8

(22) Anmeldetag: 27.05.80

(51) Int. Cl.³: **B 01 J 23/74,** C 07 C 85/06

(54) Kobaltkatalysator, seine Herstellung und Verwendung, insbesondere zur Herstellung von Aminen.

(30) Priorität: 09.06.79 DE 2923472

(43) Veröffentlichungstag der Anmeldung:
07.01.81 Patentblatt 81/1

(45) Bekanntmachung des Hinweises auf die Patenterteilung:
09.02.83 Patentblatt 83/6

(84) Benannte Vertragsstaaten:
BE DE FR GB IT SE

(56) Entgegenhaltungen:
FR-A-2 180 462
GB-A-801 428
GB-A-1 206 659
US-A-1 909 133
US-A-3 840 479
JOURNAL OF THE AMERICAN CHEMICAL SO-
CIETY, Band 76, Nr. 2, 4. Februar 1954 GASTON PA
(US) STOWE: »Cobalt, iron and some of their
alloys as catalysts for the hydrogeneration of
carbon dioxide«, Seiten 319—323.

(73) Patentinhaber: BASF Aktiengesellschaft,
Carl-Bosch-Strasse 38, D-6700 Ludwigshafen (DE)

(72) Erfinder: Hertel, Otto, Dr., Koenigsbacher Strasse 68,
D-6700 Ludwigshafen (DE)
Erfinder: Hoffmann, Herwig, Dr., Knietschstrasse 21,
D-6710 Frankenthal (DE)
Erfinder: Boettger, Guenter, Dr., Langen Wingert 16 B,
D-6702 Bad Duerkheim 1 (DE)
Erfinder: Koernig, Wolfgang, Dr., Dachsweg 5,
D-6901 Dossenheim (DE)
Erfinder: Baer, Karl, Dr., Kastanienweg 1,
D-6940 Weinheim (DE)
Erfinder: Lebkuecher, Rolf, Dr., Kranichstrasse 9,
D-6700 Ludwigshafen (DE)

Kobaltkatalysator, seine Herstellung und Verwendung, insbesondere zur Herstellung von Aminen

Die Herstellung von Aminen durch Umsetzung von Verbindungen, die alkoholische Hydroxylgruppen tragen, mit Ammoniak bzw. Aminen, die noch freie Wasserstoffatome besitzen, ist bekannt. Eine zusammenfassende Übersicht mit weiteren Angaben ist in Houben-Weyl, Methoden der Organischen Chemie, 4. Auflage, Band 11/1, Seite 117 ff enthalten.

Zwar kann die den verschiedenen Verfahren zugrundeliegende Reaktion als Umsetzung unter Wasseraustritt, also Dehydratisierung bzw. Kondensation betrachtet werden; es gibt aber Anzeichen dafür, daß sie auch über eine intermediäre Dehydrierungs/Hydrierungs-Stufe ablaufen kann.

Katalysatoren, die hydrierende Metalle, z. B. Kupfer, Kobalt oder Nickel auf dehydratisierend wirkendem Träger, z. B. Aluminiumoxid enthalten, werden daher für diese Verfahren besonders empfohlen. Trägerfreie Metalle, wie Raney-Nickel oder -Kobalt und Katalysatoren aus diesen Metallen in gesinterter Form werden ebenfalls benutzt.

Die bekannten Katalysatoren müssen häufig regeneriert werden und haben oft den Nachteil, Nebenreaktionen zu begünstigen, indem sie Spaltungen der Kohlenstoffkette oder von schon vorhandenen Stickstoff-Kohlenstoff-Bindungen hervorrufen. Besonders tertiäre Stickstoffatome sind anfällig gegen diese Nebenwirkungen.

Reine Metallkatalysatoren, etwa aus Kobalt, sind zudem zunehmend konstspieliger geworden.

Die Erfindung möchte die bekannten Kobalt-Katalysatoren verbessern und verbilligen, ohne daß deren Vorteile eingebüßt werden. Weiterhin sollen Nachteile der bekannten Kobalt-Katalysatoren unterdrückt werden: Reine Kobalt-Katalysatoren können die Spaltung von $C-C-$ und $C-N$-Bindungen begünstigen. Der Vorteil reiner Kobalt-Katalysatoren, z. B. ihre hohe Aktivität und ihre hohe mechanische Widerstandsfähigkeit sollte jedoch erhalten bleiben.

Es wurde gefunden, daß Eisen in spezieller Weise zusammen mit Kobalt zu Katalysatoren verarbeitet, einen großen Teil des Kobalts zu ersetzen vermag, ohne daß irgendwelche Nachteile zu beobachten sind. Reines Eisen, wie auch immer hergestellt, ist im erfindungsgemäßen Sinne ungeeignet.

Erfindungsgemäße Katalysatoren sind solche, die 5 bis 75 Gew.-% Eisen und 95 bis 25 Gew.-% Kobalt enthalten und dadurch gekennzeichnet sind, daß sie erhalten werden können durch Einleiten entsprechender Mischungen jeweils 0,1 bis 1 molarer Lösungen von Eisen- bzw. Kobaltnitrat in verdünnte Sodalösung bei etwa 70°C, wobei man einen pH-Wert von 7 oder darüber einhält, die erhaltenen Niederschläge wäscht, zersetzt, formt und reduziert. Sie enthalten vorteilhaft etwa gleiche Gewichtsmengen an Eisen und Kobalt; ein Gehalt von mindestens 25% an Kobalt soll in der Regel nicht unterschritten werden. Weniger als 5% an Eisen zuzusetzen, ist in der Regel ebenfalls ohne Vorteil, weil sich solche Katalysatoren nicht wesentlich von reinen Kobalt-Katalysatoren unterscheiden und kaum mehr eine Verbilligung eintritt bzw. diese von den höheren Kosten der Rückgewinnung der Katalysatormetalle aufgewogen wird. Kobalt-Katalysatoren, in denen etwa 25 bis 50% des Kobalts durch Eisen ersetzt sind, sind in jeder Hinsicht der Wirkung besonders günstig.

Insbesondere wird ein Kobalt und Eisen enthaltender Katalysator, der vorzugsweise zur Verwendung bei der Hydrierung bzw. der aminierenden Hydrierung von Alkoholen oder Carbonylverbindungen gedacht ist, durch Fällung aus wäßriger Co- und Fe-Salzlösung mittels alkalischer Lösung, Abtrennen des Niederschlags, Waschen, Trocknen, Zersetzen und Aktivieren mit reduzierenden Mitteln, erhalten, wenn man die Metallsalze in einer solchen Menge, daß sich ein Katalysator aus 5 bis 75 Gew.-% Eisen und 95 bis 25 Gew.-% Kobalt ergibt, mittels Alkalicarbonatlösung derart ausfällt, daß das Alkalicarbonat stets einen Überschuß bildet bzw. in der die Fällungsprodukte enthaltenen Lösung einen pH-Wert von 7 oder darüber einhält und die Zersetzungsprodukte gegebenenfalls formt.

Die Fällung sollte aus verdünnter bis mäßig konzentrierter Lösung geschehen, um einheitliche Fällungen zu erhalten. Etwa 0,1 bis 1 molare Lösungen der Nitrate von Eisen(III) und Kobalt(II) sind besonders geeignet. Auch die Sulfate und die Chloride können verwendet werden.

Man fällt mit Soda- bzw. Pottaschelösung, die z. B. etwa 5- bis 30gewichtsprozentig sein kann, bei etwa 60 bis 90°C, wobei sich die Fällung über etwa 1 bis 5 Stunden, je nach Art der benutzten Vorrichtung, erstrecken sollte. Man stellt einen pH-Wert um 7 ein, wobei die Fällung bei absatzweisem Verfahren in der Weise erfolgt, daß die Metallsalzlösung in überschüssige Alkalicarbonat-Lösung eingerührt wird, so daß bis zum Ende der Fällung der Niederschlag stets von einem Überschuß an Carbonat-Ionen umgeben ist, und schließlich ein pH-Wert von nicht unter 7 erreicht wird. Bei fortlaufender Herstellung können beide Lösungen auch gemeinsam einem Rührgefäß zugeführt werden, wobei hre Mengen so bemessen werden, daß die Mischung einen pH-Wert von 7 oder darüber aufweist, d. h. man legt anfangs einen Überschuß an Alkalicarbonat vor und hält diesen aufrecht.

Die vorstehenden Maßnahmen sind zur Erzielung eines guten, insbesondere druckfesten (also mechanisch haltbaren) und trotzdem voluminösen (also porösen und daher hochaktiven) Katalysators entscheidend; an sich ist nämlich bekannt, Eisen-Kobaltkatalysatoren herzustellen, indem man deren Salzlösungen mit z. B. Pottaschelösung fällt (vgl. J. Am. Chem. Soc. 76, S. 319–323 (1954)). Es ist auch bekannt, Eisen-Koblat-Katalysatoren, die auf verschiedene Weise hergestellt sein können, für die hydrierende Aminierung, z. B. die Herstellung von Hexamethylendiamin oder Ethylendiamin zu verwenden. Die beschriebenen Herstellverfahren (vgl. GB-A-1 206 659, FR-A-2 180 462 und US-A-3 840 479) führen jedoch praktisch stets zu Katalysatoren, die zu wenig porös sind, so daß sie für die feste Anordnung, z. B. in einem Rohrreaktor nur zusammen mit einem Träger verwendet werden können (GB-A-1 206 659) bzw. in unwirtschaftlich großer Gewichtsmenge verwendet werden müssen.

Der Niederschlag wird wie üblich gewaschen und getrocknet, z. B. bei 100 bis 150°C. Er erleidet beim Glühen einen Verlust von etwa 22 bis 25% und enthält i. a. etwa 0,25 bis 0,5% Alkali (Natrium; als $Na_2O$). Röntgenographisch handelt es sich um ein Gemisch von Kobaltcarbonat ($CoCO_3$) und — überwiegend — einer Verbindung beider Metalle mit der Struktur des natürlichen Mannasseits; ähnliche künstlich herstellbare Verbindungen sind z. B. in der DE-C-2 024 282 beschrieben. Verbindungen, die ausschließlich bzw. im wesentlichen Kobalt und Eisen enthalten, sind dort allerdings nicht genannt.

Der Anteil der definierten Verbindung am Gemisch mit Kobaltcarbonat hängt wahrscheinlich mit dem Verhältnis der beteiligten Metalle zusammen.

Die beim Erhitzen auf 300°C oder mehr erhaltene feinteilige Masse ist praktisch röntgenamorph. Sie kann mit etwas Flüssigkeit (Wasser o. ä.) angeteigt, verknetet und zu Formkörpern verarbeitet werden, wie sie bei Katalysatoren üblich sind, z. B. Strängen oder Pellets. Eine Verwendung des unverarbeiteten Pulvers als suspendierter Katalysator ist gleichfalls möglich. Man reduziert wie übliche vor dem Gebrauch mit Wasserstoff. Ebenso ist es möglich, Fällung und Verarbeitung in Gegenwart eines chemisch indifferenten Trägers vorzunehmen, so daß ein Kobalt-Eisenkatalysator entsteht, der z. B. eine besonders große spezifische Oberfläche aufweist.

Der Katalysator ist besonders geeignet für den Austausch alkoholischer Hydroxylgruppen gegen Ammoniak- bzw. Aminogruppen. In diesem Falle ist die Anwesenheit von Wasserstoff nicht erforderlich, so daß hydrierende Nebenreaktionen weitgehend vermieden werden können. Man wendet wie gewöhnlich Temperaturen von 100 bis 250°C und bei Umsetzung mit Ammoniak ausreichenden (z. B. 50 bis 250 bar) Druck an. Empfindliche Stoffe, z. B. solche mit leicht abspaltbaren Substituenten können mit gutem Ergebnis umgesetzt werden.

Der Katalysator ist auch für andere Hydrierungen, die üblicherweise an Kobalt durchgeführt werden, geeignet.

## Herstellbeispiel

Ein Katalysator mit einem relativ geringen Schüttgewicht wird nach folgendem speziellen Verfahren hergestellt; die angestrebte Zusammensetzung entspricht z. B. 51,22% $Fe_2O_3$ und 48,78% $Co_3O_4$ (50 Gew.-% Fe zu 50 Gew.-% Co):

60 kg 20prozentige Sodalösung werden in einem Rührgefäß vorgelegt, auf etwa 70°C erhitzt und unter Rühren bei konstanter Temperatur ein Gemisch von 33 kg technischer Eisennitratlösung mit einem Gehalt von 10,86% $Fe_2O_3$ und 25,72 kg Kobaltnitratlösung mit einem Gehalt von 16,48% $Co_3O_4$ im Verlauf von 4 Stunden zudosiert, bis ein pH-Wert, mit der Glaselektrode gemessen, von 7,0 erreicht ist. Dann wird über einen Regelmechanismus, der den Zulauf steuert, unter Einhaltung des pH-Werts von 7,0 allmählich die restliche Menge Nitratlösung zugegeben. Der entstehende Niederschlag wird abfiltriert, mit vollentsalztem Wasser gewaschen und bei 120°C getrocknet.

Der Niederschlag enthält noch 0,47% $Na_2O$ bei einem Glühverlust von 23%; er besteht röntgenographisch aus einem Gemisch von etwas $CoCO_3$ (mäßig gut kristallisiert) und sehr viel von einer mannasseitähnlichen Struktur (feinkristallisiert).

Der Niederschlag wird nun bei 350°C an der Luft zersetzt. Die Hauptmenge der chemisch gebundenen flüchtigen Bestandteile entweicht zwischen 145 und 200°C (Maximum bei 174°C) und zwischen 220°C und 265°C (Maximum bei 253°C). Man erhält ein Pulver, das ein Schüttgewicht von 458 g/l und einen Glühverlust bei 900°C von 4,4% aufweist. Es wird unter Zugabe von 2% verdünnter Salpetersäure und ausreichend Wasser geknetet, stranggepreßt, getrocknet und bei 400°C getempert. Man erhält Extrudate, die ein Litergewicht von 900 g bei einer Porosität von 0,42 $cm^3/g$ und einer Schneidehärte von 2,5 kg aufweisen. Die Stränge lassen sich im Bereich von 265–365°C (Maximum bei 336°C) in Wasserstoffatmosphäre bei schwach exothermer Reaktion vollständig reduzieren. Nach der Reduktion liegt röntgenographisch ein kubisch raumzentrierter Mischkristall zwischen Fe und Co vor.

Ein derart hergestellter Katalysator eignet sich nicht nur zur Aminierung von gesättigten Aminoalkoholen, sondern auch zur Hydrierung von Nitrilen und zur gleichzeitigen Hydrierung und Aminierung von Aminoalkenolen und Aminoalkinolen. Er ist also zur Hydrierung von C–N-Mehrfachbindungen, C–C-Doppel- und Freifachbindungen in der Lage.

## Beispiel 1

Je 200 g 1-Diäthylaminopentanol-4 und 600 g $NH_3$ werden stündlich an einem bei 290°C reduzierten Katalysator, der nach der vorstehenden Vorschrift erhalten wurde, ohne Mitverwendung von Wasserstoff bei 190°C und 200 bar kontinuierlich umgesetzt. Das erhaltene Reaktionsgemisch enthält jeweils 180,29 g 1-Diäthylaminopentylamin-4 und 11,6 g 1-Diäthylaminopentanol-4, was einem Umsatz von 94,2% und einer Ausbeute von 95,7% des Hauptprodukts, bezogen auf das umgesetzte 1-Diäthylaminopentanol-4, entspricht.

### Beispiel 2

Der in Beispiel 1 beschriebene Versuch wird in Anwesenheit von Wasserstoff wiederholt. Der Reaktionsdruck beträgt ebenfalls 200 bar. Man erhält 172,4 g 1-Diäthylaminopentylamin-4 und 17,2 g 1-Diäthylaminopentanol-4, was einem Umsatz von 91,4% und einer Ausbeute von 94,3% des Hauptprodukts, bezogen auf das umgesetzte 1-Diäthylaminopentanol-4 entspricht. Der Katalysator ist somit gegen die Anwensenheit von Wasserstoff relativ unempfindlich, was etwa die Neigung zur Aufspaltung von C—N-Bindungen angeht.

### Beispiel 3

Der Versuch des Beispiels 1 wird mit einem bei 280°C reduzierten Katalysator, der 75% Kobalt und 25% Eisen enthält, bei 189°C und 200 bar wiederholt. Man erhält je 178,6 g 1-Diäthylaminopentylamin-4 und 6 Gew.-Teile 1-Diäthylaminopentanol-4, was einem Umsatz von 97% und einer Ausbeute von 92,6%, bezogen auf das umgesetzte 1-Diäthylaminopentanol-4 entspricht.

### Vergleichsversuch

200 g 1-Diäthylaminopentanol-4 und 600 g $NH_3$ werden an einem bei 250 bis 300°C reduzierten 100prozentigen Kobaltkatalysator ohne Anwesenheit von Wasserstoff bei 190°C und 200 bar kontinuierlich umgesetzt. Man erhält 126 g 1-Diäthylaminopentylamin-4 und 60 g 1-Diäthylaminopentanol-4, was einem Umsatz von 70% und einer Ausbeute von 90% des Zielprodukts, bezogen auf das umgesetzte 1-Diäthylaminopentanol-4 entspricht.

## Patentansprüche

1. Verfahren zur Herstellung eines Kobalt und Eisen enthaltenden Katalysators, vorzugsweise zur Verwendung bei der Hydrierung bzw. der aminierenden Hydrierung von Alkoholen oder Carbonylverbindungen, durch Fällung aus wäßriger Co- und Fe-Salzlösung mittels alkalischer Lösung, Abtrennen des Niederschlags, Waschen, Trocknen, Zersetzen und Aktivieren mit reduzierenden Mitteln, d a d u r c h  g e k e n n - z e i c h n e t , daß man die Metallsalze in einer solchen Menge, daß sich ein Katalysator aus 5 bis 75 Gew.-% Eisen und 95 bis 25 Gew.-% Kobalt ergibt, mittels Alkalicarbonatlösung derart ausfällt, daß das Alkalicarbonat stets einen Überschuß bildet bzw. in der die Fällungsprodukte enthaltenden Lösung ein pH-Wert von 7 oder darüber eingehalten wird und daß man die Zersetzungsprodukte gegebenenfalls formt.

2. 5 bis 75 Gew.-% Eisen und 95 bis 25 Gew.-% Kobalt enthaltender Katalysator, erhältlich durch Einleiten entsprechender Mischungen jeweils 0,1 bis 1 molarer Lösungen von Eisen- bzw. Kobaltnitrat in verdünnte Sodalösung bei etwa 70°C, wobei man einen pH-Wert von 7 oder darüber einhält, die erhaltenen Niederschläge wäscht, zersetzt, formt und reduziert.

3. Verwendung der nach Anspruch 1 oder 2 erhaltenen bzw. beanspruchten Katalysatoren zur Hydrierung und bei der Aminolyse von Alkoholen.

## Claims

1. Process for the preparation of a catalyst containing cobalt and iron, preferably for use in the hydrogenation or the aminating hydrogenation of alcohols or carbonyl compounds, by precipitation from an aqueous Co and Fe salt solution by means of an alkaline solution, separation of the precipitate, washing, drying, disintegration and activation with reducing agents, wherein the metal salts are precipitated in an amount such that a catalyst of from 5 to 75% by weight of iron and from 95 to 25% by weight of cobalt results, by means of an alkali metal carbonate solution, in a manner such that the alkali metal carbonate is always in excess or a pH value of 7 or more is maintained in the solution containing the precipitation products, and, if appropriate, the disintegration products are shaped.

2. Catalyst containing from 5 to 75% by weight of iron and from 95 to 25% by weight of cobalt, obtainable by passing appropriate mixtures of in each case from 0.1 to 1 molar solutions of iron nitrate and cobalt nitrate into dilute sodium carbonate solution at about 70°C, a pH value of 7 or more being maintained and the resulting precipitates being washed, disintegrated, shaped and reduced.

3. Use of the catalysts obtained or claimed according to claim 1 or 2 for hydrogenation and in the aminolysis of alcohols.

## Revendications

1. Procédé de préparation d'un catalyseur au fer et au cobalt, convenant surtout dans les réactions d'hydrogénation ou d'hydrogénation-amination d'alcools ou de composés carbonylés, par précipitation de sels du fer et du cobalt en solution aqueuse par addition d'une solution alcaline, séparation du précipité, lavage, séchage, décomposition et activation par des agents réducteurs, caractérisé en ce que l'on précipite les sels des métaux en des proportions telles qu'il se forme un catalyseur avec une teneur en fer entre 5 et 75% en poids et une teneur en cobalt entre 95 et 25% en poids, la précipitation étant réalisée à l'aide d'une solution d'un carbonate de métal alcalin en veillant à maintenir en permanence un excès de carbonate d'alcali ou un pH de 7 ou plus dans la solution contenant les produits précipités, les produits de décomposition étant le cas échéant façonnés dans la forme voulue.

2. Catalyseur contenant entre 5 et 75% en poids de fer et entre 95 et 25% en poids de cobalt, préparé par addition d'un mélange approprié de solutions 0,1 à 1 molaires de nitrate de fer et de nitrate de cobalt vers 70°C dans une solution diluée de carbonate de sodium, dans laquelle on maintient un pH de 7 ou plus, suivie du lavage du précipité formé, de sa décomposition, de son formage et de sa réduction.

3. Utilisation des catalyseurs revendiqués dans la revendication 1 ou préparés selon la revendication 2 pour l'hydrogénation et l'amination d'alcools.